# EUROPÄISCHE PATENTANMELDUNG

(11) **EP 3 133 733 A1**
(43) Veröffentlichungstag der Anmeldung: **22.02.2017**
(21) Anmeldenummer: 15182026.3
(22) Anmeldetag: 21.08.2015
(51) Int. Cl.: H02S 30/10, F24J 2/52

(54) **PHOTOVOLTAIKMODUL MIT KURZEN SCHIENENELEMENTEN**

(71) Anmelder: Fleck, Olaf, 91325 Adelsdorf (DE)
(72) Erfinder: Fleck, Olaf, 91325 Adelsdorf (DE)
(74) Vertreter: Hofstetter, Schurack & Partner

(57) **Zusammenfassung**

Zur Erhöhung des Ertrags von Solaranlagen wird ein Photovoltaikmodul (1) mit einem Laminatelement (2), das plattenförmig ausgebildet ist, zum Wandeln von Licht in elektrische Energie und einer Rahmeneinrichtung als einzige Halteeinrichtung des Laminatelements (2) vorgesehen. Die Rahmeneinrichtung weist genau zwei Schienenelemente (3) auf, die an dem Laminatelement an zwei gegenüberliegenden Seiten befestigt sind. Jedes der Schienenelemente (3) ist kürzer als die jeweilige Seite (L) des Laminatelements (2), an der das Schienenelement (3) befestigt ist. Damit kann weniger Verschmutzung und eine bessere Hinterlüftung gewährleistet werden.

## Beschreibung

Die vorliegende Erfindung betrifft ein Photovoltaikmodul mit einem Laminatelement, das plattenförmig ausgebildet ist, zum Wandeln von Licht in elektrische Energie und einer Rahmeneinrichtung als einzige Halteeinrichtung des Laminatelements, wobei die Rahmeneinrichtung genau zwei Schienenelemente aufweist, die an dem Laminatelement an zwei gegenüberliegenden Seiten befestigt sind. Darüber hinaus betrifft die vorliegende Erfindung eine Solaranlage mit mehreren derartigen Photovoltaikmodulen.

Ein Photovoltaikmodul wandelt Licht, insbesondere Sonnenlicht, in elektrische Energie. Es besitzt typischerweise ein sogenanntes Laminat, das plattenförmig ausgebildet ist und in der Draufsicht, d.h. in einer Haupterstreckungsebene, rechteckförmige Gestalt besitzt. Ein solches Laminat besitzt meist eine Trägerschicht, auf dem die eigentliche lichtempfindliche Schicht aufgebracht ist. Darüber wiederum befindet sich mindestens eine lichtdurchlässige Schicht, die die lichtempfindliche Schicht gegenüber Umwelteinflüssen schützt.

Das Laminat eines Photovoltaikmoduls ist in der Regel mechanisch sehr empfindlich. Daher besitzt jedes Photovoltaikmodul in der Regel eine spezielle Halteeinrichtung, die das Laminat trägt. Eine solche Halteeinrichtung kann eine Rahmeneinrichtung sein, die das Laminat an allen vier Seiten oder zumindest an zwei Seiten umgibt. Die Druckschrift US 2015/0122333 A1 zeigt ein solches gerahmtes Photovoltaikmodul, bei dem das Laminat an zwei gegenüberliegenden Seiten durch vertikale Schienenelemente und an den anderen Seiten durch laterale Schienenelemente gerahmt ist. Die Schienenelemente, die die Rahmeneinrichtung bilden, dienen zur Befestigung des Photovoltaikmoduls auf Trägerschienen, welche wiederum auf Montageelementen oder Dächern montiert sind.

In aller Regel sind die Photovoltaikmodule auf einer schrägen Ebene zur Sonne ausgerichtet. Dies hat unter anderem den Vorteil, dass von den Photovoltaikmodulen Schnee abrutscht und Regenwasser abfließt. Besitzen die Photovoltaikmodule jedoch einen Rahmen, der an der Unterkante eines Solarmoduls verläuft, ergibt sich vielfach eine Schwelle, die das Abrutschen von Schnee bzw. das Abfließen von Wasser zumindest teilweise verhindert. Hierdurch ergibt sich ein Rückstau von Schnee, Eis und Schmutzablagerungen. Wenn diese Ablagerungen das Photovoltaikmodul bedecken, sinkt der Ertrag entsprechend.

Bei Regenwasser, das sich auf dem rahmenlosen Photovoltaikmodul ansammelt, ergibt sich kurzfristig meist kaum eine Ertragseinbuße. Da das Regenwasser typischerweise jedoch auch Schmutzpartikel mit sich führt, und Wasserrückstände immer an den gleichen Stellen an den Schwellen auftreten, konzentrieren sich diese Schmutzpartikel, wenn das Wasser immer wieder verdunstet. Dies führt mittelfristig zu ebenfalls deutlichen Ertragseinbußen.

Eine Lösung hierzu wird in der Druckschrift US 2015/0122333 A1 vorgestellt. Zwischen zwei vertikal aneinandergrenzenden Photovoltaikmodulen befindet sich eine horizontale Schiene. Ihre Oberkante liegt etwas unterhalb eines Rahmenelements des oberen Photovoltaikmoduls. Dadurch kann das Wasser besser abfließen und Staub sammelt sich nicht so leicht auf dem oberen Photovoltaikmodul. Allerdings werden Verschmutzungen hier auf das jeweils darunter liegende Modul übertragen.

Darüber hinaus sind jedoch auch beispielsweise aus der Druckschrift DE 10 2008 050 529 A1 Photovoltaikanlagen bekannt, die eine Unterkonstruktion zur Aufnahme eines Photovoltaikmoduls mit einem Rückträger aufweisen. Der Rückträger ist auf der Rückseite des Photovoltaikmoduls mittels zweier Klebeflächen angebracht, die in einem Abstand zueinander angeordnet und mit einem Verbindungsstück versehen sind. Es ergibt sich damit eine rahmenlose Bauweise für die Photovoltaikmodule.

Ein ähnliches Photovoltaikmodul, das auch als Solarmodul bezeichnet werden kann, ist aus der Druckschrift WO 2013/081899 A1 bekannt. Fixierelemente sind an der Rückseite des Solarmoduls angebracht, um dieses an Schienen zu befestigen.

Die Problematik der rahmenlosen Photovoltaikmodule liegt darin, dass a) deren rückseitige Befestigung in der Regel eine ausreichende Luftströmung zur Kühlung der Laminate verhindert und b) auch nur eine limitierte Applikation möglich ist. Eine derartige Kühlung ist jedoch von entscheidender Bedeutung, denn der Ertrag eines Photovoltaikmoduls sinkt mit steigender Temperatur. So kann die Leistung eines Photovoltaikmoduls durchaus 5 % geringer sein, wenn die Temperatur um 10 °C steigt.

Die Aufgabe der vorliegenden Erfindung besteht somit darin, Ertragseinbußen bei Photovoltaikmodulen durch Fremdpartikel oder zu geringe Kühlung zu verringern.

Erfindungsgemäß wird diese Aufgabe gelöst durch ein Photovoltaikmodul mit
- einem Laminatelement, das plattenförmig ausgebildet ist, zum Wandeln von Licht in elektrische Energie und,
- einer Rahmeneinrichtung als einzige Halteeinrichtung des Laminatelements, wobei
- die Rahmeneinrichtung genau zwei Schienenelemente aufweist, die an dem Laminatelement an zwei gegenüberliegenden Seiten befestigt sind,
und wobei
- jedes der Schienenelemente kürzer ist als die jeweilige Seite des Laminatelements, an der das Schienenelement befestigt ist.

In vorteilhafter Weise wird das Laminatelement des Photovoltaikmoduls ausschließlich durch zwei Schienenelemente gehalten, die für einen besseren Halt als punktuelle Befestigungen an den Seiten, für bessere mechanische Stabilität und für erhöhten mechanischen Schutz sorgen. Darüber hinaus ist jedes der Schienenelemente kürzer als die jeweilige Seite des Laminatelements. Dies bedeutet, dass das Laminatelement, wenn es nur von den Schienenelementen gehalten ist, an den über die Schienenelemente hinaus überstehenden Abschnitten frei ist. An diesen überstehenden Abschnitten kann Luft zirkulieren. Damit kann eine Hinterlüftung des Photovoltaikmoduls besser gewährleistet werden.

Die spezielle Art der Rahmeneinrichtung mit den zwei Schienenelementen besitzt zusätzlich den Vorteil, dass das Photovoltaikmodul derart schräg zur Schwerkraft montiert werden kann, dass die Schienenelemente nach unten verlaufen. Dies wiederum bedeutet, dass die untere Kante eines solchen Photovoltaikmoduls frei ist, so dass Schmutz, Schnee oder Wasser ohne Weiteres ablaufen kann, ohne eine Schwelle zu überwinden und ohne das Ansammeln von Fremdpartikeln zu fördern. Dementsprechend kann gewährleistet werden, dass ein solches Photovoltaikmodul seine Leistungsfähigkeit über einen längeren Zeitraum beibehält als bisher bekannte Photovoltaikmodule.

Vorzugsweise ist jedes der Schienenelemente um mindestens 5 %, vorzugsweise um mindestens 10 %, kürzer als die jeweilige Seite des Laminatelements. Damit steht das Laminatelement deutlich über die Schienenelemente hinaus, so dass der Raum, der frei von den Schienenelementen ist, für Luftzirkulation gut genutzt werden kann. Besonders vorteilhaft ist sogar, wenn jedes der Schienenelemente um etwa 20 % kürzer als die jeweilige Seite des Laminatelements ist. Damit blieben bei einem 1 m langen Laminatelement beispielsweise die oberen und unteren 10 cm der Seite des Laminatelements frei.

In einer bevorzugten Ausführungsform weist jedes Schienenelement eine Nut auf, in die das Laminatelement ragt. Das Laminatelement ist damit in drei Richtungen formschlüssig eingebettet. Sind beide Schienenelemente vorhanden, so kann das Laminatelement nur noch aus der Nut in Längsrichtung geschoben werden, was beispielsweise durch Einkleben verhindert werden kann.

Günstigerweise ist das Laminatelement in einer Hauptausdehnungsebene rechteckig ausgebildet, und die Schienenelemente verlaufen parallel zueinander. Durch derartige rechteckige Laminatelemente lassen sich nahezu lückenlose große Flächen für Photovoltaikanlagen realisieren. Wenn dann die parallelen Schienenelemente schräg nach unten weisen, sammeln sich an keinem der Schienenelemente Wasser, so dass entsprechende Schmutzansammlungen vermieden werden.

In einer Weiterentwicklung können Halteelemente zum Stabilisieren der Schienenelemente an einer der Lichteinfallseite des Laminatelements gegenüberliegenden Rückseite angeklebt sein. Derartige Halteelemente besitzen unter Umständen nicht nur die Funktion des Stabilisierens der Schienenelemente, sondern zusätzlich auch die Funktion einer Versteifung des Laminatelements, insbesondere dann, wenn das Halteelement an dem Schienenelement befestigt ist.

Speziell kann derjenige Abschnitt jedes Halteelements, welcher an der Rückseite des Laminatelements angeklebt ist, plattenförmig ausgebildet sein und vorzugsweise eine Dicke von wenigen Zentimetern aufweisen. Durch diese plattenförmige Ausgestaltung des angeklebten Abschnitts des Halteelements kann gewährleistet werden, dass ein Luftstrom an der Rückseite des Laminatelements durch das Halteelement kaum beeinflusst wird. Beispielsweise besitzt der plattenförmige Abschnitt eine Dicke von wenigen Millimetern.

Vorteilhafterweise wird eine Solaranlage mit mehreren oben genannten Photovoltaikmodulen aufgebaut, wobei die Photovoltaikmodule auf einer Befestigungsvorrichtung befestigt sind, und die Schienenelemente in betriebsmäßigem Gebrauch schräg zur Schwerkraft angeordnet sind. Eine solche Solaranlage ist beispielsweise auf dem Dach eines Hauses oder auf geeigneten Stützen am Boden montiert. Der Winkel, in dem die Hauptausdehnungsebene jedes Photovoltaikmoduls schräg zur Schwerkraft verläuft ist vorzugsweise auf die Haupteinstrahlrichtung der Sonne ausgerichtet.

Die Befestigungsvorrichtung, auf der die Photovoltaikmodule befestigt sind, kann Fixiereinrichtungen aufweisen, die ausschließlich an jeweiligen Schienenelementen angreifen, so dass jedes Photovoltaikmodul nur am jeweiligen Paar von Schienenelementen gehalten ist. Dies hat den Vorteil, dass beispielsweise bei einem rechteckigen Laminat die unteren Seiten frei sein können, so dass das Wasser ungehindert ablaufen kann. Da das Photovoltaikmodul nur durch die beiden Schienenelemente gehalten wird, wird gleichzeitig gewährleistet, dass die Rückseite des Photovoltaikmoduls frei ist und damit von Luft umströmt werden kann.

Speziell kann jedes Photovoltaikmodul senkrecht zu den Schienenelementen ausschließlich durch die Fixiereinrichtungen direkt gestützt sein, und die Summe der Erstreckungen der Fixiereinrichtungen unmittelbar unterhalb des Laminatelements auf keiner Strecke senkrecht zu den Schienenelementen ist größer als ein Drittel des Abstands der Schienenelemente zueinander. Ein Luftstrom an der Rückseite der Laminatelemente wird also allenfalls durch die Fixiereinrichtungen gehindert. Wenn diese Fixiereinrichtungen aber allenfalls ein Drittel der Strecke zwischen den Schienenelementen, welche typischerweise nach unten verlaufen, einnehmen, kann ein ausreichend großer Luftstrom gewährleistet werden. Vorzugsweise nehmen diese Fixiereinrichtungen jedoch höchstens 10% der Strecke zwischen den Schienenelementen in Anspruch.

Des Weiteren kann das Laminatelement jedes Photovoltaikmoduls auf seiner der Lichteinfallseite gegenüberliegenden Rückseite ausschließlich durch die jeweiligen Schienenelemente berührt sein, und die Befestigungsvorrichtung kann derart ausgestaltet sein, dass vorzugsweise ein Raum von mindestens 5 cm Höhe über 90 % der Fläche der Rückseite des Laminatelements frei von Luft durchströmbar ist. Die Rückseite des Laminats wird also ausschließlich durch Teile der Schienenelemente verdeckt und der Rest der jeweiligen Rückseite des Laminatelements ist frei. Dabei ist es von besonderem Vorteil, wenn der Abstand zwischen der Rückseite und der Befestigungsvorrichtung über einem Großteil der Laminatrückseite mindestens 5 cm und vorzugsweise mindestens 10 cm beträgt, so dass ein ausreichender Luftstrom an der Laminatrückseite gewährleistet werden kann.

Die vorliegende Erfindung wird nun anhand der beigefügten Zeichnungen näher erläutert, in denen zeigen:
- Fig. 1: eine Draufsicht auf eine Solaranlage mit mehreren Photovoltaikmodulen;
- Fig. 2: eine Querschnittsansicht der Solaranlage von Fig. 1 gemäß Schnitt II; und
- Fig. 3: eine Querschnittsansicht der Solaranlage von Fig. 1 gemäß Schnitt III.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern in Alleinstellung oder in anderen technisch sinnvollen Kombinationen realisiert werden können.

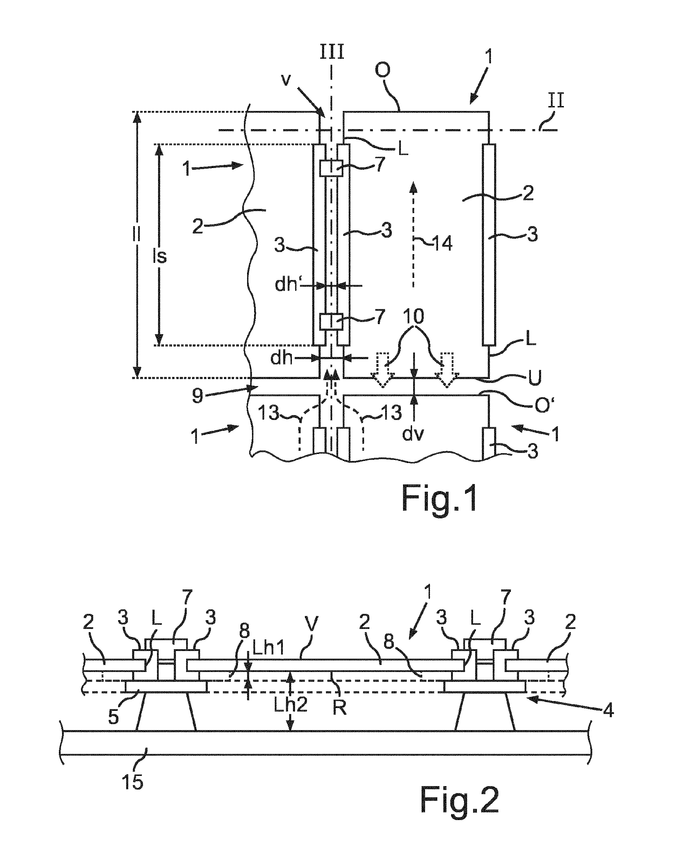

Fig. 1 zeigt einen Teil einer exemplarischen Solaranlage mit mehreren Photovoltaikmodulen 1. Die Photovoltaikmodule 1 sind hier im Wesentlichen rechteckig und werden zu einer Gesamtfläche nebeneinander platziert.

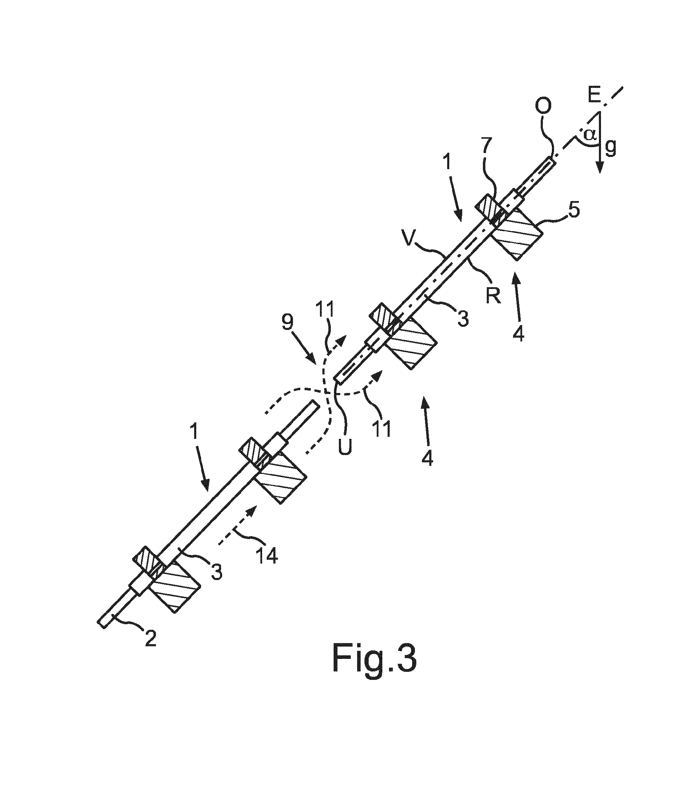

Meist wird eine Solaranlage schräg montiert, wie dies in Fig. 3 angedeutet ist. Es ergibt sich dabei eine schräge Ebene E, in der sich die Photovoltaikmodule hauptsächlich erstrecken. Diese schräge Ebene E nimmt zur Schwerkraft g einen beliebigen Winkel α ein. Je geringer der Winkel α ist, desto mehr gewinnt die erfindungsgemäße Barrierefreiheit der Photovoltaikmodule an Relevanz. In der schrägen Ebene E ergibt sich für jedes Photovoltaikmodul eine obere Kante O und eine untere Kante U (vergleiche Fig. 1). Zwischen der Unterkante U und einer Oberkante O' eines darunter befindlichen Photovoltaikmoduls ergibt sich ein vertikaler Abstand dv. In einer Lpcke 12 zwischen zwei horizontal benachbarten Photovoltaikmodulen ergibt sich in den freien Bereichen der Laminate 2 ein Abstand dh. Im Bereich der Schienenelemente 3 ergibt sich ein Abstand dh'.

Ein Photovoltaikmodul 1 umfasst hier das genannte Laminat 2, welches das Licht in elektrische Energie wandelt. Das Laminat 2 besitzt plattenförmige Gestalt und hat hier die bevorzugte Form eines Rechtecks mit den Schmalseiten O und U, die im montierten Zustand in der Regel horizontal verlaufen, und Längsseiten L, die wie die Ebene E im Betrieb der Solaranlage bzw. des Photovoltaikmoduls 1 schräg nach unten verlaufen und den Winkel α relativ zur Schwerkraft g einnehmen.

Das Laminat 2, d.h. der eigentliche photovoltaische Wandler, wird durch eine Rahmeneinrichtung gehalten. Diese Rahmeneinrichtung besteht hier ausschließlich aus zwei Schienenelementen 3, die einander vorzugsweise an den Längsseiten L gegenüberstehen. Für den Fall eines Quadrats können die Seiten L, U und O auch gleich lang sein. Unter Umständen sind die Seiten L auch kürzer als die Seiten U und O.

Die Längsseite L des Laminats 2 besitzt hier die Länge II. Eine Schiene 3 besitzt die Länge Is, die kürzer ist als die Seitenlänge II des Laminats 2. Beispielsweise beträgt die Seitenlänge II 1 m und die Schienenlänge Is 80 cm. Das Schienenelement 3 ist vorzugsweise mittig an der Längsseite L angebracht. Im konkreten Beispiel würde das Laminat 2 an beiden Enden der Schiene 3 um 10 cm herausragen.

In Fig. 2 ist ein Schnitt II durch die Solaranlage von Fig. 1 dargestellt. Die Darstellung ist gegenüber derjenigen von Fig. 1 etwas vergrößert und außerdem ist auf der rechten Seite ein weiteres Photovoltaikmodul dargestellt.

Die Schienen 3 besitzen hier ein U-Profil, und die Laminate 2 sind in die Nut der jeweiligen Schiene 3 eingesetzt. Die Längsseite L des Laminatelements 2 ist also im Bereich der Schiene bzw. des Schienenelements 3 vollständig von dieser bzw. diesem umschlossen. Das Schienenelement 3 wird vorzugsweise an das Laminatelement 2 aufgeklebt. Damit werden die Laminatelemente 2 durch Formschluss und Stoffschluss in den Schienenelementen 3 gehalten.

Jedes Photovoltaikmodul 1 wird auf einer Befestigungsvorrichtung 4 befestigt. Dies gibt die Schnittzeichnung von Fig. 2 exemplarisch wieder. Die Befestigungsvorrichtung 4 weist hier beispielsweise Trägerschienen oder Teilträgerschienen 5 auf, die vorzugsweise parallel zu der Ebene E der Photovoltaikmodule 1 verlaufen, oder aber auch parallel zum Untergrund bzw. Unterbau 15 (z.B. Trapezdach), auf dem die Solaranlage steht. Gegebenenfalls besitzt die Befestigungsvorrichtung auch eine Platte, z. B. Bodenplatte, als Träger.

Auf den Befestigungsschienen 5 bzw. einer entsprechenden Platte sind Fixiereinrichtungen 7 in einem Abstand, der in etwa der Breite eines Laminats entspricht, angeordnet. Die Fixiereinrichtungen 7 besitzen beispielsweise ein Klemmelement, das eine oder mehrere Schienen 3 in Position hält. Vorzugsweise greift das Klemmelement ausschließlich an der oder den jeweiligen Schienen 3 an und nicht am Laminat 2. Dadurch wird das Laminat 2 gegenüber zu hohen mechanischen Drücken geschützt. Günstigerweise handelt es sich bei den Schienen 3 um Aluminium-Profile und bei dem Klemmelement 7 um ein Aluminiumbauteil, so dass bei der Befestigung Metall auf Metall wirkt und nicht auf einen glasartigen Körper wie das Laminat 2.

Optional kann ein Halteelement 8 vorgesehen sein, um das Laminatelement 2 besser zu halten. Dazu wird das vorzugsweise plattenförmige Halteelement 8 an der Rückseite R des Laminatelements 2, die der Vorderseite V bzw. Lichteinfallseite gegenüberliegt, angeklebt. Das Halteelement 8 kann einteilig mit dem Schienenelement 3 oder der Fixiereinrichtung 7 verbunden sein. Durch das Halteelement 8 wird zusätzliche Stabilität erreicht, um den thermischen Gegebenheiten einer Solaranlage besser Rechnung zu tragen.

Fig. 3 zeigt eine Schnittansicht gemäß dem Schnitt III aus Fig. 1 durch die Solaranlage. Auch hier handelt es sich nicht um eine exakte maßstabsgetreue Darstellung, sondern eher um eine etwas vergrößerte Wiedergabe. Wie erwähnt erstrecken sich die Photovoltaikmodule 1 im Wesentlichen in der zur Schwerkraft g schrägen Ebene E. Zwischen den beiden übereinander angeordneten Photovoltaikmodulen 1 befindet sich eine Lücke 9 der Breite dv (vergleiche Fig. 1).

Während des Betriebs sind die Photovoltaikmodule der Witterung ausgesetzt. Bei Schneefall sammelt sich Schnee auf der Vorderseite V des Laminats 2 und rutscht mit der Zeit ab. Da die Rahmeneinrichtung ausschließlich an den nach unten verlaufenden Längsseiten L am Laminat 2 befestigt ist, befindet sich an der Unterseite des Laminats 2 kein Rahmen. Dies bedeutet, dass das Laminat 2 an der Unterseite frei ist, so dass der Schnee ohne Schwelle abrutschen kann. Gegebenenfalls kann er in die Lücke 9 zwischen den Photovoltaikmodulen 1 fallen. Die volle Wirksamkeit der Photovoltaikmodule kann also nach einem Schneefall rasch wiederhergestellt werden, da der Schnee an der Unterseite der Laminate nicht vom Abrutschen gehindert wird. Mit vollständigem Rahmen versehene Module hingegen zeigen in der Praxis an dem unteren Rahmenelement Schneeansammlungen und vermehrte Eisbildung durch das vom Laminat auf das kältere Metall abfließende Schmelzwasser.

Ähnliches gilt bei Regen. Der Regen kann hier gemäß den Pfeilen 10 in Fig. 1 ungehindert vom Laminat 2 ablaufen, denn er muss an der Unterseite U des Laminats keine Schwelle bzw. kein Rahmenteil überwinden. Mit dem Regenwasser fließt aber auch die darin enthaltene Verschmutzung ab. Die Folge davon ist, dass sich im Bereich der Unterseite U keine Schmutzränder bilden, die bei üblichen quer verlaufenden Rahmenelementen entstehen. Dies aber bedeutet, dass der Ertrag der Photovoltaikmodule und damit der Solaranlage nicht durch verschmutztes Regenwasser im Laufe der Zeit abnimmt. Dieser Vorteil kommt bei flacheren Anlagen besser zum Tragen, da dort die Ablagerungen verstärkt auftreten.

Die Rahmeneinrichtung mit ausschließlich zwei Schienenelementen 3 zum Halten der Laminatelemente 2 führt auch zu thermischen Vorteilen. Wie eingangs erwähnt sinkt der Ertrag einer Solaranlage deutlich mit dem Anstieg ihrer Temperatur. Steigt ihre Temperatur beispielsweise um 10 °C, so nimmt ihr Ertrag um etwa 5 % ab. Aus diesem Grund ist die Kühlung und speziell die Hinterlüftung an der Rückseite der Laminate von höchster Bedeutung. Dadurch, dass an der Unterseite U und der Oberseite O keine Schienenelemente 3 vorgesehen sind, ergibt sich bei gleicher Anordnung der Photovoltaikmodule 1 eine größere Lücke 9 zwischen den übereinander angeordneten Photovoltaikmodulen. Diese vergrößerte Lücke 9 führt zu einem verbesserten Luftaustausch gemäß den Pfeilen 11 in Fig. 3.

Weiterhin ändert jede Schiene 3 deutlich vor dem Ende des jeweiligen Laminats 3. Dies bedeutet, dass der Bereich des Laminats 2 an der Unterseite auch in seitlicher Richtung frei ist. Wenn beispielsweise das Laminat eine Länge II von 2 m besitzt und die Schiene 3 eine Länge Is von 1,5 m, so sind unten und oben 25 cm des Laminats an der Längsseite L frei. Die Schiene 3 ist also um 25 % kürzer als die entsprechende Längsseite L des Laminats 2. Sind die Photovoltaikmodule quer angeordnet, so dass die Unterseite und die Oberseite den Längsseiten entsprechen, so befinden sich die Schienen 3 an den Querseiten des Laminats, und sie sind ebenfalls kürzer als die Querseiten. Dadurch, dass die horizontale Lücke 12 (vergleiche Fig. 1) zumindest im Bereich der Unterseite U und der Oberseite O aufgrund des Nichtvorhandenseins einer Schiene 3 verbreitert ist, kann Luft besser gemäß den Pfeilen 13 in Fig. 1 in die Lücke 12 eindringen und zur erhöhten Ventilation und besseren Kühlung der Laminate von deren Rückseite her beitragen.

Eine weitere Verbesserung der thermischen Hinterlüftung der Photovoltaikmodule 1 kann dadurch gewährleistet werden, dass die Rückseite R des Laminats 2 soweit wie möglich von Befestigungselementen freigehalten wird. Beispielsweise beträgt eine lichte Höhe lh1 (vergleiche Fig. 2) zwischen der Rückseite R und der Trägerschiene 5 der Befestigungsvorrichtung oder eine lichte Höhe lh2 zwischen der Rückseite R und einem Unterbau 15 mindestens 5 cm oder mindestens 10 cm, z. B. 20 cm. Dadurch kann sich nahezu ungehindert und barrierefrei ein Luftstrom 14 (vergleiche Fig. 1 und Fig. 3) unterhalb der Photovoltaikmodule 1 parallel zur Ebene E nach oben entfalten. Vorteilhaft trägt dazu bei, dass nur an den gegenüberliegenden Seiten des Laminats 2 jeweils Schienen 3 vorgesehen sind und diese Schienen 3 an den Befestigungsvorrichtungen zwischen jeweils zwei Laminaten oder am Rand der Solaranlage an oder unterhalb der jeweiligen Schiene 3 angeordnet sind. Diese Anordnung stört den Luftstrom gemäß Pfeil 14 nur äußerst gering.

Insgesamt tragen die verkürzten beiden Schienenelemente 3, die die gesamte Rahmeneinrichtung eines Photovoltaikmoduls 1 bilden, also nicht nur zur Reduzierung von Schnee- und Schmutzbedeckungen bei, sondern sie fördern aufgrund ihrer Anordnung auch die Kühlung der Laminate 2. Beides wirkt sich kurz- oder mittelfristig auf den Ertrag der Photovoltaikmodule bzw. Solaranlagen positiv aus.

## Patentansprüche

1. Photovoltaikmodul (1) mit
- einem Laminatelement (2), das plattenförmig ausgebildet ist, zum Wandeln von Licht in elektrische Energie und,
- einer Rahmeneinrichtung als einzige Halteeinrichtung des Laminatelements (2), wobei
- die Rahmeneinrichtung genau zwei Schienenelemente (3) aufweist, die an dem Laminatelement (2) an zwei gegenüberliegenden Seiten befestigt sind,
**dadurch gekennzeichnet, dass**
- jedes der Schienenelemente (3) kürzer ist als die jeweilige Seite des Laminatelements (2), an der das Schienenelement (3) befestigt ist.

2. Photovoltaikmodul (1) nach Anspruch 1, wobei jedes der Schienenelemente (3) um mindestens 5 %, vorzugsweise um mindestens 10 % kürzer als die jeweilige Seite (L) des Laminatelements (2) ist.

3. Photovoltaikmodul (1) nach Anspruch 1 oder 2, wobei jedes Schienenelement (3) eine Nut aufweist, in die das Laminatelement (2) ragt.

4. Photovoltaikmodul (1) nach einem der vorhergehenden Ansprüche, wobei das Laminatelement (2) in seiner Hauptausdehnungsebene rechteckig ausgebildet ist, und die Schienenelemente (3) parallel zueinander verlaufen.

5. Photovoltaikmodul (1) nach einem der vorhergehenden Ansprüche, wobei Halteelemente (8) zum Stabilisieren der Schienenelemente (3) an einer der Lichteinfallseite (V) des Laminatelements (2) gegenüberliegenden Rückseite (R) angeklebt sind.

6. Photovoltaikmodul (1) nach Anspruch 5, wobei derjenige Abschnitt jedes Halteelements (8), welcher an der Rückseite (R) des Laminatelements (2) angeklebt ist, plattenförmig ausgebildet ist und vorzugsweise eine Dicke von weniger als 1 cm aufweist.

7. Solaranlage mit mehreren Photovoltaikmodulen (1) nach einem der vorhergehenden Ansprüche, wobei die Photovoltaikmodule (1) auf einer Befestigungsvorrichtung (4) befestigt sind, und die Schienenelemente (3) in betriebsmäßigem Gebrauch schräg zu Schwerkraft (g) angeordnet sind.

8. Solaranlage nach Anspruch 7, wobei die Befestigungsvorrichtung (4) Fixiereinrichtungen (7) aufweist, die ausschließlich an jeweiligen Schienenelementen (3) angreifen, so dass jedes Photovoltaikmodul (1) nur am jeweiligen Paar von Schienenelementen (3) gehalten ist.

9. Solaranlage nach Anspruch 7 oder 8, wobei jedes Photovoltaikmodul (1) senkrecht zu den Schienenelementen (3) ausschließlich durch die Fixiereinrichtungen (7) direkt gestützt ist, und die Summe der Erstreckungen der Fixiereinrichtungen (7) unmittelbar unterhalb des Laminatelements auf keiner Strecke senkrecht zu den Schienenelementen (3) größer als ein Drittel des Abstands der Schienenelemente (3) zueinander ist.

10. Solaranlage nach einem der Ansprüche 7 bis 9, wobei das Laminatelement (2) jedes Photovoltaikmoduls (1) auf seiner der Lichteinfallseite (V) gegenüberliegenden Rückseite (R) ausschließlich durch die jeweiligen Schienenelemente (3) berührt ist, und die Befestigungsvorrichtung (4) derart ausgestaltet ist, dass vorzugsweise ein Raum von mindestes 5 cm Höhe über 90 % der Fläche der Rückseite (R) des Laminatelements (2) frei von Luft durchströmbar ist.
